# EUROPEAN PATENT APPLICATION

(11) **EP 1 667 439 A1**
(43) Date of publication of application: **07.06.2006**
(21) Application number: 04772242.6
(22) Date of filing: 26.08.2004
(51) Int. Cl.: H04N 5/265, H04N 1/387, G06T 3/00

(54) **PANORAMA IMAGE CREATION DEVICE AND PANORAMA IMAGE IMAGING DEVICE**

(30) Priority: 26.09.2003 JP 2003334728
(71) Applicant: SHARP KABUSHIKI KAISHA, Osaka-shi, Osaka 545-8522 (JP)
(72) Inventor: NAKAZAWA, Naofumi, Chiba-shi, Chiba 2660031 (JP)
(74) Representative: Müller - Hoffmann & Partner
(86) International application number: PCT/JP2004/012286
(87) International publication number: WO 2005/032125

(57) **Abstract**

Acquisition of images for creating a panorama image is facilitated and any images can be selected. Each still image corresponding to each frame of a moving image imaged with a camera 1 is created by a moving processing unit 3 and saved once in a working memory 4 as a still image sequence arranged in chronological order; any two still images are sequentially selected from the still image sequence with button manipulation in the key input unit 6; a two-screen image processing unit 5a displays the two still images with portions thereof overlapped to each other on an image displaying unit 7 to select a desired combination of the still images; each selected still image is moved/rotated to be aligned; a panorama image processing unit 5b synthesizes a panorama image; the panorama image is displayed on the image displaying unit 7 and accumulated in a recording medium 8. As one image displayed on two screens, the foremost image of the still image sequence or the panorama image in the recording medium 8 is selected, and as the other image on the other side, any still image is selected from the still image sequence.

## Description

### TECHNICAL FIELD

The present invention relates to a panorama image creation device and a panorama image imaging device and especially, to a panorama image creation device that creates still images from a moving image for a panorama image synthesized by selecting synthetic still images for synthesizing a panorama image with a wide viewing angle from the created still images while displaying the still images on a screen, and a panorama image imaging device that has imaging means for imaging the moving image.

### BACKGROUND OF THE INVENTION

As a panorama image imaging device with a conventional panorama image imaging function, two types of apparatus exist: one type creates a panorama image from a plurality of still images; and the other type creates a panorama image from a moving image.
In a method proposed as prior art for creating a panorama image from still images, as described in "Panoramic Shot Controller for Camera" shown in patent document 1, when a panorama image is created by synthesizing two imaged images laterally, for example if a second imaged image is linked to the right side of a first image, to assist imaging the second image after imaging the first image, the first imaged image is shifted to the left on an imaging operation screen to display the right portion to be linked to the left portion of the second image remaining on the imaging operation screen to facilitate an imaging position of the second image, or as described in "Camera Device and Image Pickup Method" shown as patent document 2, by displaying a first imaged image entirely in another frame (another window) constituting a portion of a screen, a suitable angle can be given when a second image is imaged while checking a panorama image to be created.

In a method proposed as prior art for creating a panorama image from a moving image, as described in "Image Compositing Device and Recording Medium where Image Compositing Method is Recorded" shown as patent document 3, by imaging while panning and by comparing two frame images (frames) automatically selected from frame images (frames) captured as a moving image to obtain a movement quantity, positions to be synthesized are determined for respective frame images to perform panoramic synthesis automatically in real time or after imaging.
Patent Document 1: Japanese Laid-Open Patent Publication No. H05-142682
Patent Document 2: Japanese Laid-Open Patent Publication No. H11-75108
Patent Document 3: Japanese Laid-Open Patent Publication No. 2000-244814

### DISCLOSURE OF THE INVENTION

### PROBLEM TO BE SOLVED BY THE INVENTION

However, with regard to prior art that images still images to synthesize a panorama image, since a special imaging method is needed for facilitating panoramic synthesis when imaging, such a special imaging method must be learned in advance. Since it takes time to image images, a state of an imaging object to be imaged may change and a desired panorama image may not be obtained.

With regard to prior art that uses a moving image to synthesize a panorama image, since automatic synthesis is performed in real time or after imaging in the employed mode, a suitable combination of images to be synthesized as a panorama image cannot be selected at the time of synthesis and it is problematic that the image synthesis cannot be performed for desired images.

The present invention is devised in consideration of such circumstances and is intended to enable to select any combination of desired still images for synthesizing a panorama image with a wide viewing angle and to easily obtain a highly accurate panorama image by creating a still image corresponding to each frame of a moving image, by an operator manually selecting any two suitable panoramic synthetic still images from the created still images while displaying the still images on a screen, and by positioning the selected two still images as well as to facilitate an imaging method for obtaining panorama synthetic images by imaging an imaging object including the desired images for synthesizing a panorama image as a moving image.

### MEANS FOR SOLVING THE PROBLEMS

First technical means is a panorama image creation device comprisingmoving image processingmeans for creating each still image corresponding to each frame of a moving image; selecting means for selecting any two still images from a plurality of the still images created by the moving image processing means; two-screen image processing means for creating a two-screen image displayed as two screens composed of two windows by scaling down or up each of two still images selected by the selecting means as well as by disposing the two still images such that portions of the respective still images overlap each other; panorama image selecting means for selecting a two-screen image to be a panorama image from the two-screen images created by the two-screen image processing means; panorama image processing means for synthesizing the two-screen image selected by the panorama image selecting means as one image to create a panorama image; image displaying means for displaying the still images, the two-screen image, or the panorama image; and a recording medium that accumulates the still images and/or the panorama images.

Second technical means is the panorama image creation device of the first technical means, wherein the selecting means can select a still image corresponding to a foremost frame located at the beginning of the moving image from the still images created by the moving image processing means as a still image displayed in one window of the screen and can select any still image corresponding to each frame subsequent to the foremost frame of the moving image as a still image displayed in the other window on the other side.

Third technical means is the panorama image creation device of the first technical means, wherein the selecting means can select the panorama image accumulated in the recording medium as a still image displayed in one window of the screen from the two still image to be selected and can select any still image corresponding to each frame subsequent to the foremost frame of the moving image as a still image displayed in the other window on the other side.

Fourth technical means is the panorama image creation device of any one of the first to third technical means, wherein when the selecting means selects any still image from the plurality of the still images created by the moving image processing means, the plurality of the still images is divided into a plurality of image candidate groups, each of which is composed of the number of still images corresponding to the predetermined number of frames determined in advance, wherein by sequentially selecting still images corresponding to the foremost frames of the divided image candidate groups at intervals and by displaying the still images as the two-screen image with the two-screen image processing means, an image candidate group to which a still image approximate to a desired still image belongs is selected as a selected image candidate group, and wherein by sequentially selecting each still image in the selected image candidate group and/or an adjacent image candidate group adjacent to the selected image candidate group to display the still image as the two-screen image with the two-screen image processing means, the panorama image selecting means can select the two-screen image to be a panorama image.

Fifth technical means is the panorama image creation device of any one of the first to fourth technical means, wherein when the two-screen image processing means creates the two-screen image composed of two still images selected by the selecting means and/or when the panorama image selecting means selects the two-screen image to be a panorama image, either or both positions of the two still images constituting the two-screen image can be moved or rotated in any vertical or horizontal directions.

Sixth technical means is the panorama image creation device of any one of the first to fifth technical means, wherein when the panorama image processing means synthesizes the two-screen image to create a panorama image, smoothing processing can be performed in mutual overlapping portion of the two still images constituting the two-screen image.

Seventh technical means is the panorama image creation device of any one of the first to sixth technical means, wherein when the panorama image processing means synthesizes the two-screen image to create a panorama image, the panorama image can be created as a scroll image sequentially scrolled to be displayed on the image displaying means.

Eighth technical means is a panorama image imaging device comprising imaging means for imaging a moving image; and the panorama image creation device of any one of the first to seventh technical means as the panorama image creating means for creating a panorama image in a panorama image imaging device comprising panorama image creating means for creating a still image corresponding to each frame of the moving image imaged by the imaging means to use the created still images to create a panorama image, which is accumulated in a recording medium.

### EFFECT OF THE INVENTION

According to the present invention constituted by each of technical means as described above, the following effect can be obtained. That is, as means for obtaining desired still images to be synthesized as a panorama image, by creating a still image corresponding to each frame of a moving image and by manually selecting two desired still images to be synthesized as a panorama image while scaling down or up and sequentially displaying two selected still images from the created still images as a two-screen image in two respective windows within one screen, an panorama image can be synthesized and a desired panorama image can be easily obtained.

If positions of still images to be synthesized as a panorama image are not optimum, each still image can be positioned by scaling, moving vertically or horizontally, or rotating each still image until optimum positions are achieved, or smoothing processing can be performed in the overlapping portion of each image to obtain a more accurate panorama image.

When a synthesized panorama image is checked on the screen, if the panorama image cannot be displayed on one screen unless reduced display is performed, the panorama image can be displayed as a scroll image in scroll display and the panorama image can be checked without reducing.

Images to be synthesized as a panorama image can be obtained by imaging a moving image with the use of moving-image imaging means such as a camera, and an imaging method for panoramic synthetic images can be made easy.

### BRIEF DESCRIPTION OF THE DRAWINGS

[Fig. 1]

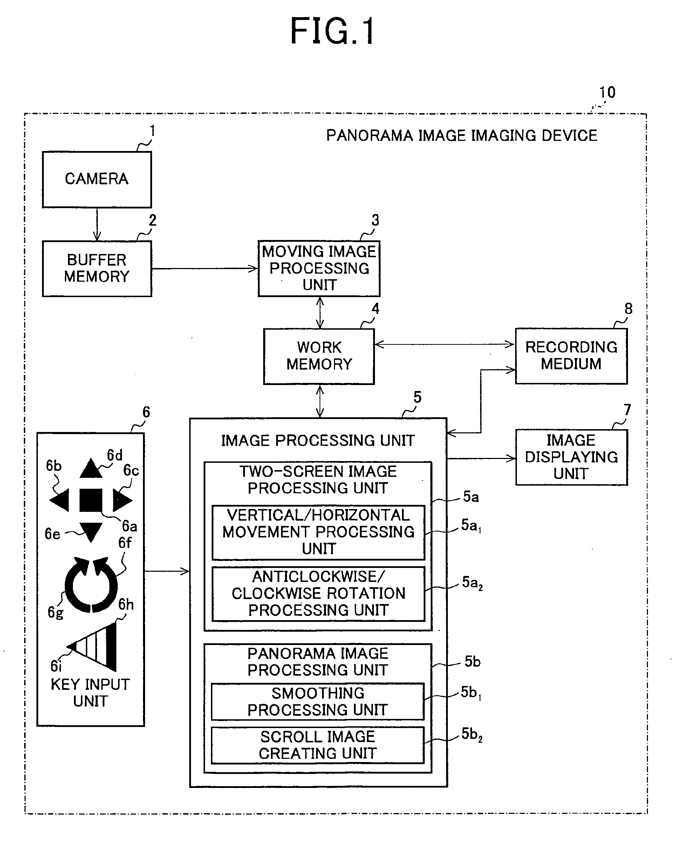

   Fig. 1 is a block configuration diagram showing a main section of a block configuration of a panorama image imaging device according to the present invention.
[Fig. 2]

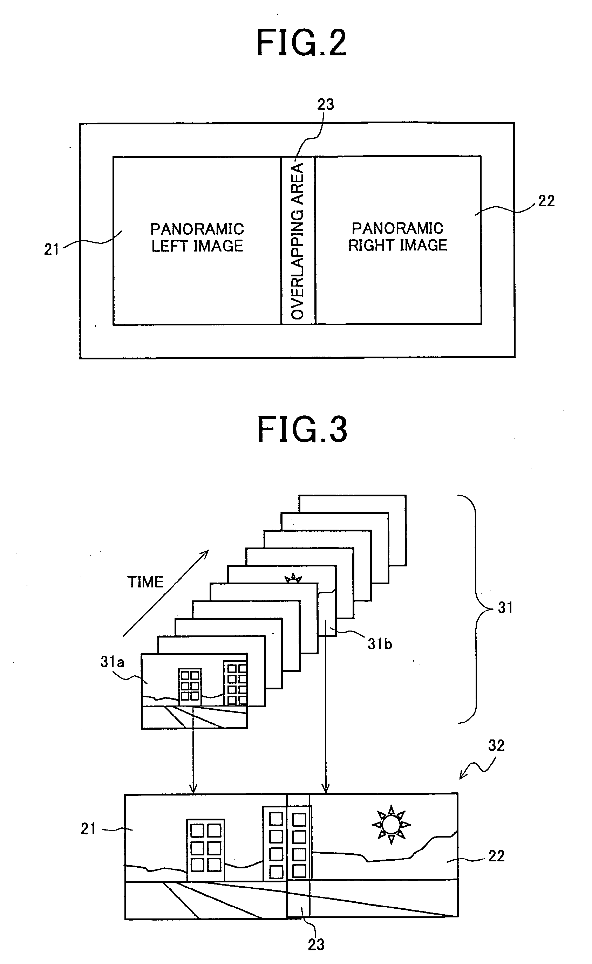

   Fig. 2 is a schematic diagram for describing an example of a screen configuring method of a panorama image displayed on an image displaying unit in the panorama image imaging device according to the present invention.
[Fig. 3]
   Fig. 3 is a schematic diagram showing how two still images are selected from a sequence of still images corresponding to frames of a moving image and are disposed and displayed on either side of the image displaying unit.
[Fig. 4]

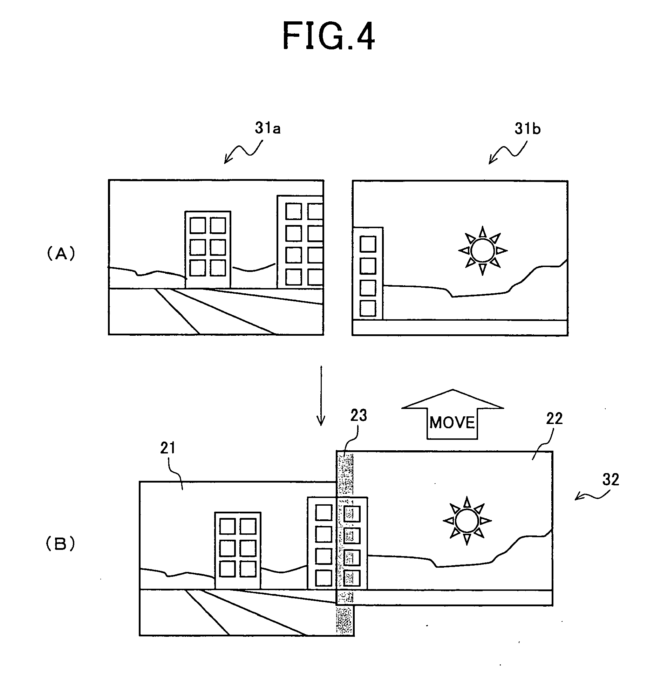

   Fig. 4 is a schematic diagram for describing how a panoramic left image and a panoramic right image are vertically aligned and displayed on the image displaying unit as a panorama image.
[Fig. 5]

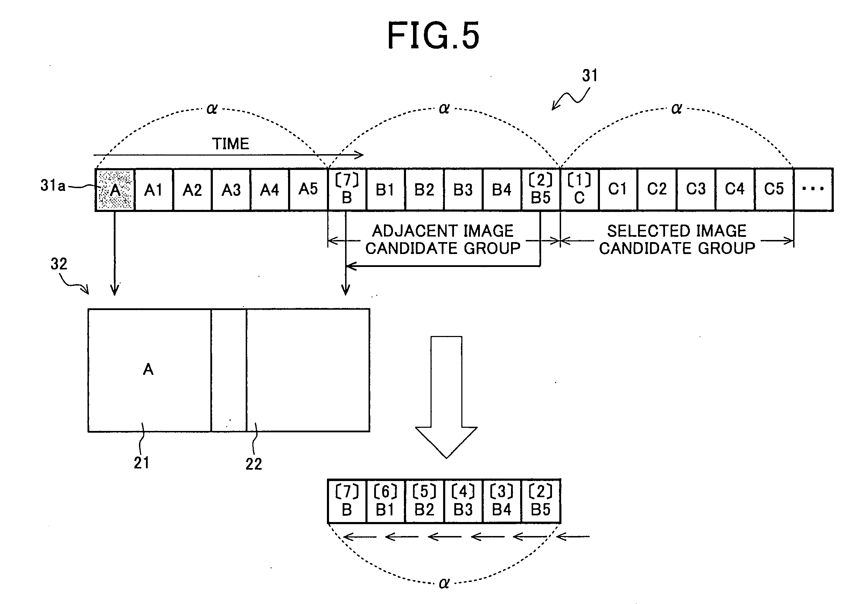

   Fig. 5 is a schematic diagram showing an example of a priority order for selecting any two still images to be synthesized as a panorama image from a still image sequence.
[Fig. 6]

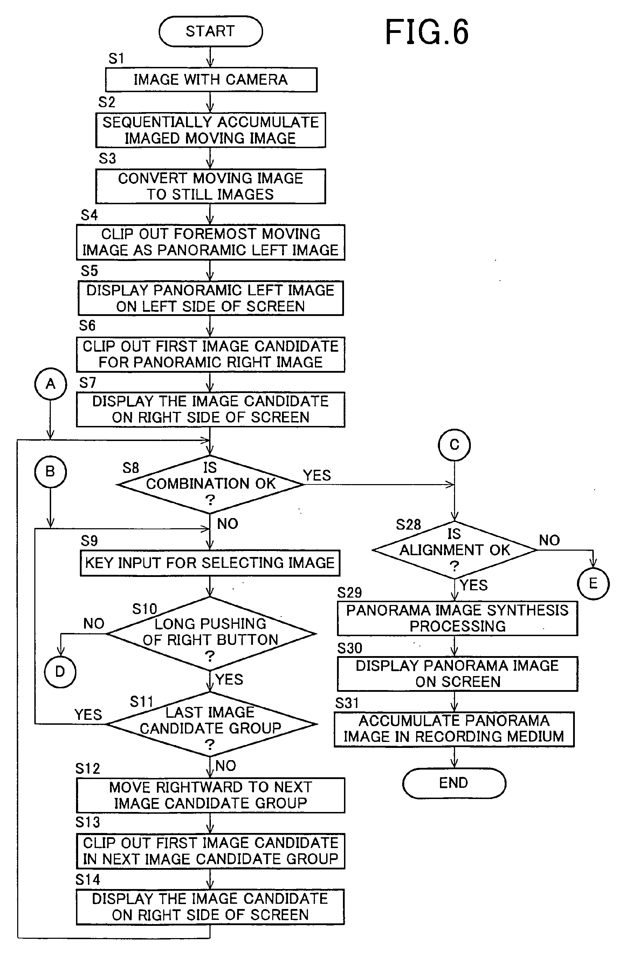

   Fig. 6 is a flowchart showing an example of a first portion of a processing procedure when a panorama image is created by selecting two still images for creating a panorama image and by positioning the both still images in the case of creating a panorama image from a still image sequence corresponding to each frame of a moving image imaged with a camera.
[Fig. 7]

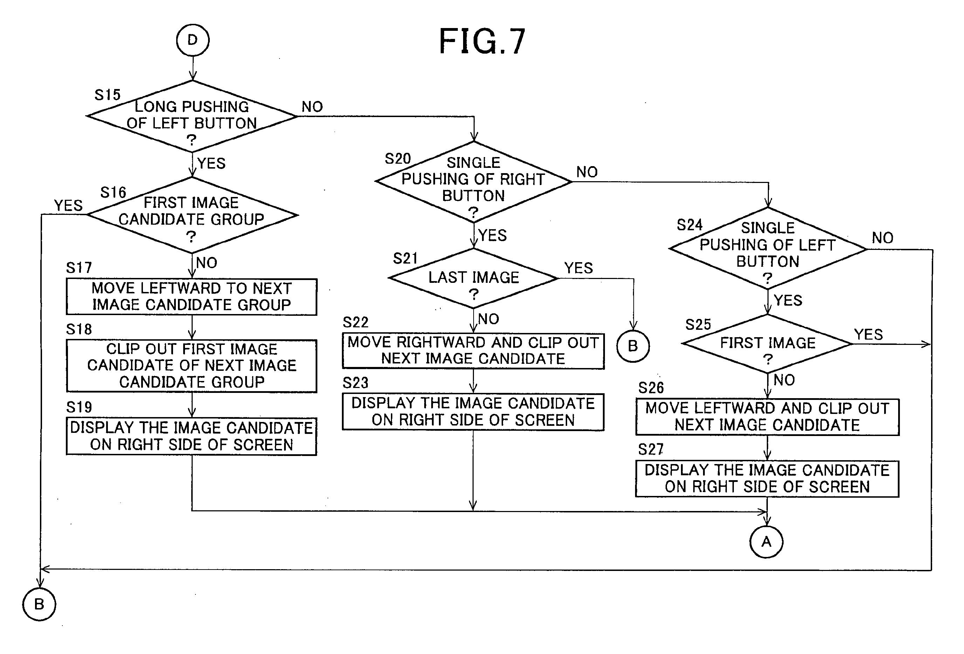

   Fig. 7 is a flowchart showing an example of an intermediate portion of the processing procedure continued from the processing of Fig. 6.
[Fig. 8]

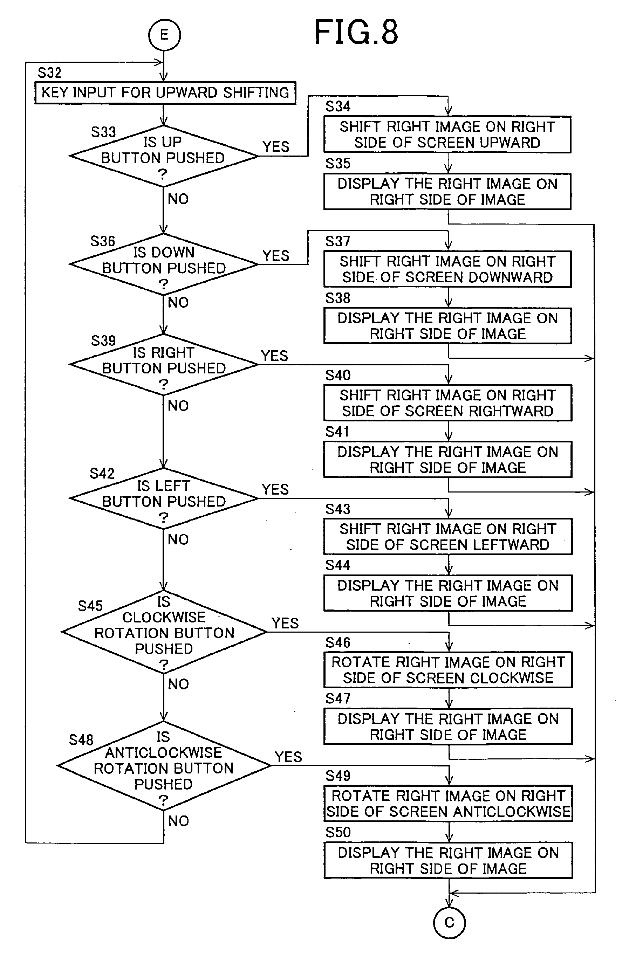

   Fig. 8 is a flowchart showing an example of a last portion of the processing procedure continued from the processing of Fig. 6.

### PREFERRED EMBODIMENTS OF THE INVENTION

A panorama image creation device according to the present invention is provided with: moving image processing means for creating each still image corresponding to each frame of a moving image; selecting means for selecting any two still images from a plurality of the still images created by the moving image processing means; two-screen image processing means for creating a two-screen image displayed as two screens composed of two windows by scaling down or up each of two still images selected by the selecting means as well as by disposing the two still images such that portions of the respective still images overlap each other; panorama image selecting means for selecting a two-screen image to be a panorama image from the two-screen images sequentially created by the two-screen image processing means; panorama image processing means for synthesizing the two-screen image selected by the panorama image selecting means as one image to create a panorama image; image displaying means for displaying the still images, the two-screen image, or the panorama image; and a recording medium that accumulates the still images and/or the panorama images, and therefore, a desired panorama image can be easily obtained.

The selecting means can select a still image corresponding to a foremost frame located at the beginning of the moving image from the still images created by the moving image processing means or the panorama image accumulated in the recording medium as a still image displayed in one window of the screen and can select any still image corresponding to each frame subsequent to the foremost frame of the moving image as a still image displayed in the other window on the other side, and therefore, a desired panorama image can be obtained more easily.

When the two-screen image processing means creates the two-screen image composed of two still images selected by the selecting means and/or when the panorama image selecting means selects the two-screen image to be a panorama image, either or both positions of the two still images constituting the two-screen image can be moved or rotated in any vertical or horizontal directions, and therefore, a more accurate panorama image can be obtained. When the panorama image processing means synthesizes the two-screen image to create a panorama image, smoothing processing can be performed in mutual overlapping portion of the two still images constituting the two-screen image; the panorama image can be created as a scroll image sequentially scrolled to be displayed on the image displaying means; therefore, a more accurate panorama image canbe obtained; and the panorama image can be checked without reducing.

The panorama image imaging device according to the present invention is provided with: imaging means for imaging a moving image; and the panorama image creation device as described above as the panorama image creating means for creating a panorama image in a panorama image imaging device provided with a panorama image creating means for creating a still image corresponding to each frame of the moving image imaged by the imaging means to use the created still images to create a panorama image, which is accumulated in a recording medium, and therefore, an image imaging method for obtaining panoramic synthesis images can be made easy.

Description will now be made of an example of embodiments of the panorama image creation device and the panorama image imaging device according to the present invention by taking the panorama image imaging device as an example with reference to the drawings. Fig. 1 is a block configuration diagram showing a main section of a block configuration of the panorama image imaging device according to the present invention.
In a panorama image imaging device 10 shown in Fig. 1, each frame of a moving image imaged with a camera 1, i.e., the imaging means is sequentially captured and temporarily stored in a buffer memory 2. A moving image processing unit 3 creates each still image corresponding to each frame of the moving image and the still images are stored in a working memory 4 as a still image sequence arranged in chronological order. Using the still image sequence stored in the working memory 4 and input data from a key input unit 6 constituting the selecting means for still images, two candidate still images to be synthesized as a panorama image are sequentially selected, and a two-screen image processing unit 5a of an image processing unit 5 creates a two-screen image for two-screen display composed of two windows displaying two selected still images respectively, which is displayed on an image displaying unit 7.

Left and right buttons 6b, 6c of the key input unit 6 constitute the selecting means selecting any two still images from the still image sequence stored in the working memory 4; by operating either of the left and right buttons 6b, 6c, the still images in the working memory 4 are sequentially selected and displayed as a two-screen image on the image displaying unit 7; and by operating an OK button 6a of the key input unit 6 constituting panorama image selecting means for selecting a two-screen image to be a panorama image, two still images to be synthesized as a panorama image are selected. The selected two still images are synthesized as one panorama image by a panorama image processing unit 5b of the image processing unit 5 and displayed on the image displaying unit 7, and by operation of the key input unit 6 indicating that confirmation is obtained from an operator, the synthesized panorama image is accumulated in a recording medium 8.

With key operation not shown of the key input unit 6, the two-screen image processing unit 5a of the image processing unit 5 reads the panorama image once created by the panorama image processing unit 5b and accumulated in the recording medium 8 again as a still image to be synthesized as a panorama image, and by further synthesizing the panorama image and any still images stored in the working memory 4, a panorama image composed of a plurality of two or more still images can be synthesized.

In the two-screen image processing unit 5a of the image processing unit 5, when two still images to be synthesized as a panorama image are selected, by operating left, right, up and down buttons 6b, ..., 6e of the key input unit 6 before image synthesis to a panorama image, a vertical/horizontal movement processing unit 5a₁ of the two-screen image processing unit 5a can be driven to move a position of either of the two still images in any directions to perform adjustment such that the image positions are aligned to each other.

Similarly, in the two-screen image processing unit 5a of the image processing unit 5, when two still images to be synthesized as a panorama image are selected, by operating an anticlockwise rotation button 6f and a clockwise rotation button 6g of the key input unit 6 before image synthesis to a panorama image, a anticlockwise/clockwise rotation processing unit 5a₂ of the two-screen image processing unit 5a can be driven to rotate a position of either of the two still images in any directions to perform adjustment such that the image positions are aligned to each other.

In the two-screen image processing unit 5a of the image processing unit 5, when two still images to be synthesized as a panorama image are selected, by operating an enlargement button 6h and a reduction button 6i of the key input unit 6 before image synthesis to a panorama image, either of the two still images can be scaled to any image sizes to perform adjustment such that the image sizes are aligned to each other.

Above-described movement, rotation or scaling operation for the two still images can be performed in completely the same way in the two-screen image processing unit 5a of the image processing unit 5 when two still images are sequentially selected as selected candidates for an panorama image from the still image sequence of the working memory 4 to create a two-screen image displayed in two windows.

In the panorama image processing unit 5b of the image processing unit 5, when images are synthesized as a panorama image, a smoothing processing unit 5b₁ of the panorama image processing unit 5b can be driven for the mutual overlapping image portions of the two still image as the two-screen image to perform smoothing processing between respective still images to remove unnaturalness of the synthesized image as a panorama image. In the panorama image processing unit 5b of the image processing unit 5, when images are synthesized as a panorama image, by key operation not shown of the key input unit 6, a scroll image creating unit 5b₂ of the panorama image processing unit 5b can be driven to create a scroll image as a panorama image, which is not reduced and remains the original still image size, to perform the scroll display on the image displaying unit 7.

In addition to accumulating the panorama image created by the panorama image processing unit 5b, the recording medium 8 shown in Fig. 1 can accumulate the still images stored in the working memory 4 and may accumulate the moving image stored in the buffer memory 2 in some cases. In addition to displaying the two-screen image created by the two-screen image processing unit 5a in two windows and to displaying the panorama image created by the panorama image processing unit 5b, the image displaying unit 7 can regenerate and display the still images stored in the working memory 4 or the panorama images or the still images accumulated in the recording medium 8 and may display the moving image stored in the buffer memory 2 in some cases.

More detailed description will be made of the specific operation of the panorama image imaging device 10 according to the present invention. Fig. 2 is a schematic diagram for describing an example of a screen configuring method of a panorama image displayed on the image displaying unit 7 in the panorama image imaging device 10 according to the present invention.
As shown in Fig. 2, in the screen configuring method, when two still images are configured in a panorama image format, the two-screen image processing unit 5a of the image processing unit 5 reduces each of two still images and disposes two windows side to side as a panoramic left image 21 and a panoramic right image 22, for example, and the two windows are disposed such that a portion of the right area of the panoramic left image 21 and a portion of the left area of the panoramic right image 22 overlap to each other in an overlapping area 23. The size of the overlapping area 23 is determined in advance to an optimum size depending on a panoramic synthesis algorithm.

Fig. 3 is a schematic diagram showing how two still images are selected from the sequence of the still image created from each frame of a moving image and are disposed and displayed on either side of the image displaying unit 7 with the use of the screen configuring method as shown in Fig. 2.
In Fig. 3, 31 is a still image sequence arranged on a time axis and stored in the working memory 4, which has been converted by the moving image processing unit 3 as the still images corresponding to respective frames of the moving image sequentially imaged with the camera 1, and 32 is a two-screen image displayed on the image displaying unit 7 by selecting arbitrary two still images 31a, 31b from the still image sequence 31. In the display example of the two-screen image of Fig. 3, a foremost still image 31a of the still image sequence 31 is selected as the panoramic left image 21 and subsequently, the still image 31b is selected, which is displayed as the panoramic right image 22, from the still image sequence 31.

At this point, as described above, instead of selecting the still image displayed as the panoramic left image 21 from the still image sequence 31 stored in the working memory 4, after a panorama image is synthesized from desired still images in the still image sequence 31 and accumulated in the recording medium 8, the accumulated panorama image can be selected and if the panorama image is selected, the readout from the recording medium 8 can be performed again to perform the image synthesis with a still image in the still image sequence 31 or with a panorama image to create a new panorama image.

Although description has been made of an example of displaying the foremost still image 31a of the still image sequence 31 or the panorama image accumulated in the recording medium 8 as the panoramic left image 21 in the above description, the present invention is not limited to such a case and if the imaging is performed by panning the imaging start point of the moving image from right to left, the foremost still image 31a of the still image sequence 31 or the panorama image accumulated in the recording medium 8 may be displayed on the right side of the screen as the panoramic right image 22 and subsequently, a still image maybe selected, which is displayed as the panoramic left image 21, from the still image sequence 31.

Fig. 4 is a schematic diagram for describing how the panoramic left image and the panoramic right image are vertically aligned and displayed on the image displaying unit 7 as a panorama image, in the screen configuring method as shown in Fig. 2; Fig. 4(A) shows the two still images 31a, 31b arbitrarily selected from the still image sequence 31 of Fig. 3 when the still images 31a, 31b are not vertically aligned; and Fig. 4 (B) shows that the image displaying unit 7 displays a panorama image 32 synthesized by vertically aligning the two selected still images 31a, 31b. As shown in Fig. 4(B), to align the vertical position of the still image 31b selected later to the panoramic left image 21 displayed on the left side of the screen by selecting the still image 31a first, the still image 31b is moved upward to a position where the image overlaps with the panoramic left image 21, using the overlapping area 23 where images overlap to each other. Although description has been made of how the two still images 31a, 31b are aligned vertically in Figs. 4 (A) and 4(B), as described above, the two still images 31a, 31b can be aligned horizontally or the two still images 31a, 31b can be aligned in rotation directions as well.

Generally, as an imaging method of a moving image, the finder of the camera 1 is aligned to, for example, a leftmost position (right most position in some cases) desired to be displayed as a panorama image to start the imaging, and the imaging is performed for a moving image while panning to the right (left in some cases). In such imaging, the still image corresponding to each frame of the moving image sequentially imaged may be misaligned vertically since the camera 1 shakes. Therefore, the panorama image imaging device 10 according to the present invention is arranged such that after the key input unit 6 is used to select the two still images 31a, 31b to be displayed as the panorama image 32 from the moving image data, i.e., the still image sequence 31, the key input unit 6 is used again to align the vertical positions of the two still images as shown in Figs. 4 (A) and 4 (B) . Although not shown in Figs. 4(A) and 4(B), as described above, the alignment can also be performed for the horizontal positions and the anticlockwise/clockwise rotation positions of the two still images.

Fig. 5 is a schematic diagram showing an example of a priority order for selecting the any two still images 31a, 31b to be synthesized as a panorama image from the still image sequence 31.
In Fig. 5, in the still image sequence 31 corresponding to each frame of the moving image imaged with the camera 1, when the panorama image 32 is displayed, the still image 31a displayed as the panoramic left image 21 on the left side of the screen is fixed to the foremost still image A when the imaging is started with the camera 1, and description is made of a priority order when the operator selects which still image subsequent to the foremost still image A is selected as the panoramic right image 22.

When using a priority order such that still images Al, A2, ... are sequentially displayed from the position next to the foremost still image A to be selected by the operator, it takes time to obtain a desired still image, and therefore, in the employed method: the still image sequence 31 is divided into a plurality of image candidate groups, each of which is composed of the number of still images corresponding to the predetermined number of frames determined in advance; the number of still images is skipped widely by the number of frames set in advance as a skipped frame number α indicating the number of each image candidate group; and a foremost still image of each image candidate group is displayed first at intervals such that a still image B, a still image C, ... are displayed. That is, when the operator detects an approximate still image indicating that the still image is in the vicinity of a still image desired as a panorama image counterpart for the foremost still image A displayed as the panoramic left image 21 from the still images B, C, ... displayed at intervals of the skipped frame number α, for example, by performing long pushing operation equal to or longer than a predetermined time determined in advance at the left button 6b or the right button 6c of the key input unit 6, the operator determines the image candidate group to which the approximate still image belongs as a selected image candidate group.

To sequentially select and display each still image corresponding to the skipped frame number α, existing in the selected image candidate group determined and/or an adjacent image candidate group adjacent to the selected image candidate group one-by-one, the operator operates the key input unit 6 to perform, for example, single pushing operation shorter than the predetermined time determined in advance at the left button 6b or the right button 6c of the key input unit 6 to input an one-frame sequential display instruction for sequentially displaying the still images existing in the selected image candidate group and/or the adjacent image candidate group one-by-one.

When the one-frame sequential display instruction is input, by displaying the still images located in the vicinity of the still image currently displayed on the right side of the image displaying unit 7 in the skip display one-by-one, the optimum still image desired as the panoramic right image 22 can be rapidly selected. Fig. 5 shows an example that after the approximate still image approximate to the counterpart still image of the panoramic left image 21 is detected by selecting and displaying the still images at intervals of the skipped frame number α, as the vicinity still images displayed one-by-one from the selected image candidate group selected as the image candidate group to which the approximate still image belongs and/or the adjacent image candidate group, the still images are sequentially selected and displayed in the leftward or rightward direction for the number of the still images belonging to the selected image candidate group and/or the adjacent image candidate group, i.e., the number of the still images indicated by the skipped frame number α.

In the example shown in Fig. 5, the desired still image is selected by going back to the previous adjacent image candidate group B, B1, ..., B5 adjacent to the selected image candidate group including the still image C in the skip display selected as the still image located in the vicinity, and from the previous adjacent image candidate group, the still images are sequentially displayed one-by-one by going backwardly from the last still image B5, i.e., by going back to the leftward direction to the still image B. That is, in the example shown in Fig. 5, among the still images of the skip display, the still image determined as locating in the vicinity of the desired still image is the foremost still image C of the selected image candidate group, and the skipped frame number α indicating the number of the still images of each image candidate group is 6 frames. After detecting the still image C approximated to the desired still image, it is determined that the desired still image exists in the previous adjacent image candidate group adjacent to the selected image candidate group to which the still image C belongs and, for example, when a single push of the left button 6b of the key input unit 6 is input as the one-frame sequential display instruction, as shown by numbers 2, 3, 4, 5, 6, 7 in angle brackets, the still images are selected and displayed backwardly one-by-one until the desired still image is obtained by going back sequentially from the still image B5 located at the last sixth frame of the adjacent image candidate group to B4, B3, B2, B1, and B.

Figs. 6 to 8 are a series of flowcharts showing an example of a procedure when a panorama image is created by selecting two still images for creating a panorama image and by positioning the both still images in the case of creating the panorama image 32 from the still image sequence 31 corresponding to each frame of the moving image imaged with a camera. That is, the flowchart shown in Fig. 6 shows a flowchart of a first portion showing an example of a procedure selecting two still images; Fig. 7 shows a flowchart of an intermediate portion continued from the processing of Fig. 6; and Fig. 8 shows a flowchart of a last portion continued from the processing of Fig. 6.

The flowcharts of Figs. 6 to 8 describe a procedure of: converting the moving image imaged by the panning operation of the camera 1 shown in Fig. 1 from left to right to the still images with the moving image processing unit 3; sequentially storing the still images to the working memory 4 as the still image sequence 31 arranged on a time axis; defining the foremost still image as the panoramic left image 21; and using the selecting method as shown in Fig. 5 to select the panoramic right image 22 from the still image sequence 31 in the working memory 4 as well as to align the panoramic right image 22 to the panoramic left image 21 to rapidly generate the highly accurate panorama image 32.

As described above, the key input unit 6 shown in Fig. 1 is provided with: the OK button 6a indicating whether the selection of the displayed image displayed on the image displaying unit 7 is OK or not; the left button 6b instructing the movement to the left and the right button 6c instructing the movement to the right for selecting the panoramic right image 22 or for horizontally aligning the selected panoramic right image 22 to the panoramic left image 21; the up button 6d instructing the upward movement and the down button 6e instructing downward movement for vertically aligning the selected panoramic right image 22 to the panoramic left image 21.
With regard to the left button 6d and the right button 6c, depending on whether the long pushing equal to or longer than a predetermined time determined in advance is performed or the single pushing shorter than the predetermined time is performed, as described above, the selecting operation can be switched between the selection of the selected image candidate group to which the still image approximate to the desired still image belongs that is performed by displaying still images at intervals and the selection of the desired still image from the still images in the selected image candidate group and/or the adjacent image candidate group that is performed by sequentially displaying still images one-by-one.

The imaging mode of the panorama image imaging device 10 is set to a panorama image imaging mode and a moving image is imaged with the use of camera 1 while performing the panning operation from left to right (step S1). The imaged moving image is sequentially stored in the buffer memory 2 (step S2). Each frame of the moving image stored in the buffer memory 2 is sequentially converted to a still image by the moving image processing unit 3 and saved as the still image sequence 31 arranged on the time axis in the working memory 4 (step S3), As described above, a still image corresponding to the foremost image firstly imaged with the camera 1 is read from the still image sequence 31 in the working memory 4 (step S4), processed by the image processing unit 5 into the panoramic left image 21, and displayed on the left side of the screen of the image displaying unit 7 (step S5).

From the still image sequence 31 saved in the working memory 4, a first image candidate to be a candidate for the panoramic right image 22 is read out (step S6), processed by the image processing unit 3 into the panoramic right image 22, and displayed on the right side of the screen of the image displaying unit 7 (step S7). An operator determines whether or not the displayed combination of the left and right sides of the screen is the images to be synthesized as the panorama image 32 (step S8), if it is determined that the combination is not the images to be synthesized (step S8, NO), button manipulation are performed at either of the left and right buttons 6b, 6c of the key input unit 6, which is the selecting means for selecting the next still image, instead of the OK button 6a of the key input unit 6, to select the next image candidate for the panoramic right image 22(step S9).

If the long pushing of the right button 6c is performed in the key input unit 6 (step S10, YES), it is determined whether the last image candidate group of the still image sequence 31 saved in the working memory 4 is currently selected or not (step S11). If the last image candidate group is selected (step S11, YES), the procedure goes back to the step S9 to select the image candidate group on the near side going back to the left and the operation is repeated for performing the button manipulation in the key input unit 6, and on the other hand, if the last image candidate group is not selected (step S11, NO), to display the next image candidate group, the still image sequence 31 of the working memory 4 is shifted forward to the right to the next image candidate group (step S12) and the first image candidate in the next image candidate group is read out from the working memory 4 (step S13), processed by the image processing unit 5 into the panoramic right image 22, and displayed on the right side of the screen of the image displaying unit 7 (step S14) . The procedure goes back to the step S8 to determine whether images to be synthesized as the panorama image 32 are selected or not.

On the other hand, if the long pushing of the right button 6c is not performed in the key input unit 6 (step S10, NO), it is determined whether the long pushing of the left button 6b is performed or not (step S15), and if the long pushing of the left button 6b is performed (step S15, YES), it is determined whether the first image candidate group of the still image sequence 31 saved in the working memory 4 is currently selected or not (step S16). If the first image candidate group is selected (step S16, YES), to select the next image candidate group on the far side to the right, the procedure goes back to step S9 to repeat the operation of performing the button manipulation in the key input unit 6, and on the other hand, if the first image candidate group is not selected (step S16, NO), to display the next image candidate group, the still image sequence 31 of the working memory 4 is shifted backward to the left to the previous image candidate group (step S17) and the first image candidate in the next image candidate group is read out from the working memory 4 (step S18), processed by the image processing unit 5 into the panoramic right image 22, and displayed on the right side of the screen of the image displaying unit 7 (step S19). The procedure goes back to the step S8 to determine whether images to be synthesized as the panorama image 32 are selected or not.

If the long pushing is not performed for the right button 6c and the left button 6d in the key input unit 6 (step S15, NO), it is determined whether the single pushing of the right button 6c is performed or not (step S20), and if the single pushing of the right button 6c is performed (step S20, YES), it is determined whether or not the last image candidate is selected in the image candidate group currently selected (i.e., the selected image candidate group and/or the adjacent image candidate group) (step S21). If the last image candidate is selected (step S21, YES), to select the next image candidate in the backward direction in the selected image candidate group or to select the next image candidate group, the procedure goes back to the step S9 to repeat the operation for performing the button manipulation in the key input unit 6. On the other hand, if the last image candidate is not selected (step S21, NO), to display the next image candidate to the right of the current image candidate, the image candidate is shifted forward to the right to the next image candidate within the image candidate group in the working memory 4 to read out the next image candidate from the working memory 4 (step S22), which is processed by the image processing unit 5 into the panoramic right image 22 and displayed on the right side of the screen of the image displaying unit 7 (step S23). The procedure goes back to the step S8 to determine whether images to be synthesized as the panorama image 32 are selected or not.

On the other hand, if the single pushing of the right button 6c in the key input unit 6 is not performed (step S20, NO), it is determined whether the single pushing of the left button 6b is performed or not (step S24), and if the single pushing of the left button 6b is performed (step S24, YES), it is determined whether or not the first image candidate is selected in the image candidate group currently selected (i.e., the selected image candidate group and/or the adjacent image candidate group) (step S25). If the first image candidate is selected (step S25, YES), to select the next image candidate in the forward direction in the selected image candidate group or to select the next image candidate group, the procedure goes back to the step S9 to repeat the operation for performing the button manipulation in the key input unit 6. On the other hand, if the first image candidate is not selected (step S25, NO), to display the next image candidate to the left of the current image candidate, the image candidate is shifted backward to the left to the next image candidate within the image candidate group in the working memory 4 to read out the next image candidate from the working memory 4 (step S26), which is processed by the image processing unit 5 into the panoramic right image 22 and displayed on the right side of the screen of the image displaying unit 7 (step S27). The procedure goes back to the step S8 to determine whether images to be synthesized as the panorama image 32 are selected or not.

If the long pushing or the single pushing is not performed for the right button 6c and the left button 6d in the key input unit 6 (step S24, NO), it is determined that invalid button manipulation is performed and the procedure goes back to step S9 to repeat the operation for performing the button manipulation in the key input unit 6.

At step S8, if the operator determines that the displayed combination of the left and right sides of the screen is the images to be synthesized as the panorama image 32 and if the OK button 6a of the key input unit 6 is manipulated as the panorama image selecting means (step S8, YES), the operator determines whether or not the display positions of the images displayed on the left and right sides of the screen are aligned and positioned to be synthesized as the panorama image 32 (step S28), and if it is determined that the alignment is insufficient (step S28, NO), to adjust the display position of the right image based on the position of the left image, button manipulation is performed at any one of the up, down, left, and right buttons 6d, 6e, 6b, 6c of the key input unit 6, instead of the OK button 6a of the key input unit 6.

It is determined whether the up button 6d is pushed or not (step S33), and if the up button 6d is pushed (step S33, YES), after upward shift processing is performed by the vertical/horizontal movement processing unit 5a₁ of the image processing unit 5 for moving the right image upward by one step (step S34), the right image is processed by the two-screen image processing unit 5a of the image processing unit 5 into the panoramic right image 22 and displayed on the right side of the screen of the image displaying unit 7 (step S35). The procedure goes back to the step S28 to determine whether or not the left and right images are aligned sufficiently as the panorama image 32.

On the other hand, if the up button 6d is not pushed in the key input unit 6 (step S33, NO), it is determined whether the down button 6e is pushed or not (step S36), and if the down button 6e is pushed (step S36, YES), after downward shift processing is performed by the vertical/horizontal movement processing unit 5a₁ of the image processing unit 5 for moving the right image downward by one step (step S37), the right image is processed by the two-screen image processing unit 5a of the image processing unit 5 into the panoramic right image 22 and displayed on the right side of the screen of the image displaying unit 7 (step S38). The procedure goes back to the step S28 to determine whether or not the left and right images are aligned sufficiently as the panorama image 32.

If the up button 6d and the down button 6e are not pushed in the key input unit 6 (step S36, NO), it is determined whether the right button 6c is pushed or not (step S39), and if the right button 6c is pushed (step S39, YES), after rightward shift processing is performed by the vertical/horizontal movement processing unit 5a₁ of the image processing unit 5 for moving the right image rightward by one step (step S40), the right image is processed by the two-screen image processing unit 5a of the image processing unit 5 into the panoramic right image 22 and displayed on the right side of the screen of the image displaying unit 7 (step S41). The procedure goes back to the step S28 to determine whether or not the left and right images are aligned sufficiently as the panorama image 32.

On the other hand, if the right button 6c is not pushed in the key input unit 6 (step S39, NO), it is determined whether the left button 6b is pushed or not (step S42), and if the left button 6b is pushed (step S42, YES), after leftward shift processing is performed by the vertical/horizontal movement processing unit 5a₁ of the image processing unit 5 for moving the right image leftward by one step (step S43), the right image is processed by the two-screen image processing unit 5a of the image processing unit 5 into the panoramic right image 22 and displayed on the right side of the screen of the image displaying unit 7 (step S44). The procedure goes back to the step S28 to determine whether or not the left and right images are aligned sufficiently as the panorama image 32.

If any one of the up, down, left, and right buttons 6d, 6e, 6b, 6c is not pushed in the key input unit 6 (step S42, NO), it is determined whether the clockwise rotation button 6g is pushed or not (step S45), and if the clockwise rotation button 6g is pushed (step S45, YES), after clockwise rotation processing is performed by the anticlockwise/clockwise rotation processing unit 5a₂ of the image processing unit 5 for rotating the right image clockwise by one step (step S46), the right image is processed by the two-screen image processing unit 5a of the image processing unit 5 into the panoramic right image 22 and displayed on the right side of the screen of the image displaying unit 7 (step S47). The procedure goes back to the step S28 to determine whether or not the left and right images are aligned sufficiently as the panorama image 32.

On the other hand, if the clockwise rotation button 6g is not pushed in the key input unit 6 (step S45, NO), it is determined whether the anticlockwise rotation button 6f is pushed or not (step S48), and if the anticlockwise rotation button 6f is pushed (step S48, YES), after anticlockwise rotation processing is performed by the anticlockwise/clockwise rotation processing unit 5a₂ of the image processing unit 5 for rotating the right image anticlockwise by one step (step S49), the right image is processed by the two-screen image processing unit 5a of the image processing unit 5 into the panoramic right image 22 and displayed on the right side of the screen of the image displaying unit 7 (step S50). The procedure goes back to the step S28 to determine whether or not the left and right images are aligned sufficiently as the panorama image 32.

If any one of the up, down, left, and right buttons 6d, 6e, 6b, 6c and the anticlockwise/clockwise rotation buttons 6f, 6g is not pushed (step S48, NO), it is determined that invalid button manipulation is performed and the procedure goes back to step S32 to repeat the operation for performing the button manipulation in the key input unit 6.

At step S28, if the operator determines that the display positions of the images displayed on the left and right sides of the screen are aligned and sufficiently positioned to be synthesized as the panorama image 32 and if the OK button 6a of the key input unit 6 is manipulated (step S28, YES), since the selection is completed for the left image and the right image to be displayed as the panorama image 32 and the alignment is also completed for the left image and the right image, after the smoothing processing unit 5b₁ of the image processing unit 5 performs the smoothing processing between the left and right images including the overlapping portion of the both images, image synthetic processing is performed to put the left and right images together as one panorama image 32 (step S29) and the synthesized panorama image 32 is displayed on the screen of the image displaying unit 7 (step S30). With the instruction from the operator via the key input unit 6, the synthesized panorama image 32 is accumulated in the recording medium 8 (step S31) .

Although the flowchart shown in Fig. 6 shows the case that the foremost still image of the still image sequence 31 stored in the working memory 4 is fixed as the panoramic left image 21; the panoramic right image 22 is selected from the still image sequence 31 in the working memory 4; and the panoramic right image 22 is aligned to the panoramic left image 21, the present invention is not limited to such a case, and left and right may be reversed to fix the foremost still image of the still image sequence 31 stored in the working memory 4 as the panoramic right image 22, select the panoramic left image 21 from the still image sequence 31 in the working memory 4, and align the panoramic left image 21 to the panoramic right image 22.

Instead of using the foremost still image of the still image sequence 31 in the working memory 4 as the reference image, the panorama image 32 accumulated in the recording medium 8 may be used. Alternatively, in some cases, both the panoramic left image 21 and the panoramic right image 22 may be arbitrarily selected from the still image sequence 31 in the working memory 4 and the panorama images 32 in the recording medium 8 and, with regard to the alignment for the panorama image, the alignment may be enabled to be adjusted not only for the panoramic right image 22 but also the panoramic left image 21.

### EXPLANATIONS OF REFERENCE NUMERALS

1 ··· camera, 2 ··· buffer memory, 3 ··· moving image processing unit, 4 ··· working memory, 5 ··· image processing unit, 5a ··· two-screen image processing unit, 5a₁ ··· vertical/horizontal movement processing unit, 5a₂ ··· anticlockwise/clockwise rotation processing unit, 5b ··· panorama image processing unit, 5b₁ ··· smoothing processing unit, 5b₂ ··· scroll image creating unit, 6 ··· key input unit, 6a ··· OK button, 6b ··· left button, 6c ··· right button, 6d ··· up button, 6e ··· down button, 6f ··· anticlockwise rotation button, 6g ··· clockwise rotation button, 6h ··· enlargement button, 6i ··· reduction button, 7 ··· image displaying unit, 8 ··· recording medium, 10 ··· panorama image imaging device, 21 ··· panoramic left image, 22 ... panoramic right image, 23 ... overlapping area, 31 ... still image sequence, 31a, 31b ··· still image, and 32 ... panorama image.

## Claims

1. A panorama image creation device comprising: moving image processing means for creating each still image corresponding to each frame of a moving image; selecting means for selecting any two still images from a plurality of the still images created by the moving image processing means; two-screen image processing means for creating a two-screen image displayed as two screens composed of two windows by scaling down or up each of two still images selected by the selecting means as well as by disposing the two still images such that portions of the respective still images overlap each other; panorama image selecting means for selecting a two-screen image to be a panorama image from the two-screen images created by the two-screen image processing means; panorama image processing means for synthesizing the two-screen image selected by the panorama image selecting means as one image to create a panorama image; image displayingmeans for displaying the still images, the two-screen image, or the panorama image; and a recording medium that accumulates the still images and/or the panorama images.

2. The panorama image creation device of claim 1, wherein the selecting means can select a still image corresponding to a foremost frame located at the beginning of the moving image from the still images created by the moving image processing means as a still image displayed in one window of the screen and can select any still image corresponding to each frame subsequent to the foremost frame of the moving image as a still image displayed in the other window on the other side.

3. The panorama image creation device of claim 1, wherein the selecting means can select the panorama image accumulated in the recording medium as a still image displayed in one window of the screen and can select any still image corresponding to each frame subsequent to the foremost frame of the moving image as a still image displayed in the other window on the other side.

4. The panorama image creation device of any one of claims 1 to 3, wherein when the selecting means selects any still image from the plurality of the still images created by the moving image processing means, the plurality of the still images is divided into a plurality of image candidate groups, each of which is composed of the number of still images corresponding to the predetermined number of frames determined in advance, wherein by sequentially selecting still images corresponding to the foremost frames of the divided image candidate groups at intervals and by displaying the still images as the two-screen image with the two-screen image processing means, an image candidate group to which a still image approximate to a desired still image belongs is selected as a selected image candidate group, and wherein by sequentially selecting each still image in the selected image candidate group and/or an adjacent image candidate group adjacent to the selected image candidate group to display the still image as the two-screen image with the two-screen image processing means, the panorama image selecting means can select the two-screen image to be a panorama image.

5. The panorama image creation device of any one of claims 1 to 4, wherein when the two-screen image processing means creates the two-screen image composed of two still images selected by the selecting means and/or when the panorama image selecting means selects the two-screen image to be a panorama image, either or both positions of the two still images constituting the two-screen image can be moved or rotated in any vertical or horizontal directions.

6. The panorama image creation device of any one of claims 1 to 5, wherein when the panorama image processing means synthesizes the two-screen image to create a panorama image, smoothing processing can be performed in mutual overlapping portion of the two still images constituting the two-screen image.

7. The panorama image creation device of any one of claims 1 to 6, wherein when the panorama image processing means synthesizes the two-screen image to create a panorama image, the panorama image can be created as a scroll image sequentially scrolled to be displayed on the image displaying means.

8. A panorama image imaging device comprising: imaging means for imaging a moving image; and the panorama image creation device of any one of claims 1 to 7 as the panorama image creating means for creating a panorama image in a panorama image imaging device comprising panorama image creating means for creating a still image corresponding to each frame of the moving image imaged by the imaging means to use the created still images to create a panorama image, which is accumulated in a recording medium.
